# EUROPÄISCHE PATENTSCHRIFT

(11) **EP 3 503 309 B1**
(45) Veröffentlichungstag und Bekanntmachung des Hinweises auf die Patenterteilung: **30.09.2020**
(21) Anmeldenummer: 18203630.1
(22) Anmeldetag: 31.10.2018
(51) Int. Cl.: H01R 24/38, H01R 12/71, H01R 13/66, H01R 24/76, H02G 3/12, H01R 13/24, H01R 13/62, H01R 13/627, H01R 39/00

(54) **ELEKTRISCHES/ELEKTRONISCHES INSTALLATIONSGERÄT**
ELECTRIC/ELECTRONIC INSTALLATION DEVICE
APPAREIL D'INSTALLATION ÉLECTRIQUE/ÉLECTRONIQUE

(30) Priorität: 20.12.2017 DE 102017130675
(43) Veröffentlichungstag der Anmeldung: 26.06.2019
(73) Patentinhaber: Insta GmbH, 58509 Lüdenscheid (DE)
(72) Erfinder: Voigtländer, Andreas, 58509 Lüdenscheid (DE); Link, Tobias, 66117 Saarbrücken (DE)

(56) Entgegenhaltungen:
- EP-A1- 0 594 937
- EP-A1- 2 461 429
- WO-A1-2016/183354
- DE-A1-102011 111 969
- DE-B3-102004 028 546

## Beschreibung

Die vorliegende Erfindung geht von einem gemäß Oberbegriff des Hauptanspruches konzipierten elektrischen/elektronischen Installationsgerät aus, welches hauptsächlich aus einem Einsatz (erstes Funktionsmodul) und einem Aufsatz (zweites Funktionsmodul) besteht. Ferner betrifft die Erfindung eine Anordnung umfassend ein elektrisches/elektronisches Installationsgerät der vorstehend genannten Art und ein daran ankoppelbares elektrisches/elektronisches Gerät.

Derartige elektrische/elektronische Installationsgeräte finden oftmals im Zusammenhang mit einem Installationssystem eines Gebäudes Verwendung. Der Einsatz (erstes Funktionsmodul) eines solchen Installationsgerätes ist typischerweise so gestaltet, dass dieser in eine handelsübliche Installationsdose eingesetzt und an der zugehörigen Wand und/oder Installationsdose befestigt werden kann. Der Aufsatz (zweites Funktionsmodul) eines solchen Installationsgerätes bildet in der Regel nicht nur die sichtseitige Oberfläche sondern weist auch die spezifischen Funktionskomponenten auf. So sind Aufsätze bekannt, die beispielsweise über ein Eingabepanel verfügen, über welches dieses Installationsgerät bedient werden kann und/oder weitere angeschlossene elektrische/elektronische Geräte beziehungsweise angeschlossene elektrische Aktoren angesteuert werden können. Darüber hinaus sind Aufsätze bekannt, die eine Anzeigeeinheit aufweisen oder insgesamt als Dateneingabeeinheit und Datenausgabeeinheit ausgeführt sind, etwa als Touchscreen-Display. In vielen Fällen weist der Aufsatz zur einfachen Kennzeichnung unterschiedliche Schaltflächen und/oder Piktogramme auf, damit sich dem Benutzer die Bedienung dieses Installationsgerätes auf einfache Art und Weise erschließt.

Durch die DE 10 2015 101 434 B3 ist ein aus einem Einsatz und einem Aufsatz bestehendes elektrisches/elektronisches Installationsgerät bekannt geworden. Im Gehäuse des in einer Installationsdose unterzubringenden Einsatzes (erstes Funktionsmodul) sind mehrere elektrische/elektronische Bauteile sowie zumindest eine erste elektrische Leiterplatte untergebracht. Rückseitig ist der Einsatz mit Verbindungselementen zum Anschluss an ein Installationssystem eines Gebäudes versehen. Frontseitig weist der Einsatz ein elektrisches Steckerteil auf, welches zum Anschluss eines wandseitig anzuordnenden, als Aufsatz ausgebildeten zweiten Funktionsmodul vorgesehen ist. Dieser Aufsatz weist ein Eingabepanel auf, über welches dieses Installationsgerät und/oder weitere angeschlossene elektrische/elektronische Geräte beziehungsweise angeschlossene elektrische Aktoren angesteuert werden können.

Aus EP 2 461 429 A1 ist ein dem Oberbegriff des Anspruchs 1 entsprechendes elektrisches Installationsgerät bekannt, bei dem ein ankoppelbares Gerät über eine elektrische Leiterplatte, die zum Anschluss des elektrischen Gerätes mehrere konzentrisch zueinander angeordnete Schleifbahnen aufweist, an ein Installationssystem angeschlossen werden kann. Dabei ist die elektrische Leiterplatte in einem Gehäuse angeordnet, das rückseitig durch ein separates und mit diesem zu verbindenden Bodenstück verschlossen ist. Die Leiterplatte wird rückseitig in das Gehäuse eingesetzt, bevor das Bodenteil montiert wird. Dieses Installationsgerät verfügt über einen als Ringmagneten ausgeführten Haltemagneten, welcher durch eine Zwischenschaltung eines Anti-Kurzschluss-Elementes hinter der elektrischen Leiterplatte angeordnet ist. Der Haltemagnet sitzt, durch das Anti-Kurzschluss-Element beabstandet, fluchtend hinter den Schleifbahnen der elektrischen Leiterplatte.

Ferner ist aus EP 0 594 937 A1 eine Steckverbindung bekannt, bei der ein in eine Buchse eingeführter Stecker durch zwei Bolzen entnahmegesperrt ist.

DE 10 2004 028 546 B3 und DE 10 2011 111 969 A1 offenbaren herkömmliche elektrische Steckdosen.

Ferner ist aus WO 2016/183354 A1 ein elektrisches Schnell-VerbindungsSystem für elektrische/elektronische Geräte bekannt, wobei dieses ein hutförmiges Koppelteil als Teil einer Gehäuseanordnung eines ankoppelbaren Gerätes aufweist.

Ausgehend von einem derart ausgebildeten elektrischen/elektronischen Installationsgerät liegt der vorliegenden Erfindung die Aufgabe zugrunde, ein aus einem Einsatz und aus einem Aufsatz bestehendes elektrisches/elektronisches Installationsgerät zu schaffen, welches nicht nur mit einer geringeren Einbautiefe realisiert werden kann, sondern bei dem zudem die Möglichkeit eines einfachen Austausches der die Schleifbahnen tragenden Leiterplatte möglich ist und magnetische Einflüsse durch den Koppelmagneten reduziert sind.

Erfindungsgemäß wird diese Aufgabe durch die im Hauptanspruch angegebenen Merkmale gelöst.

Bei einer derartigen Ausbildung von elektrischen/elektronischen Installationsgeräten ist erfindungsgemäß vorgesehen, dass das als Aufsatz ausgebildete zweite Funktionsmodul zur Ankopplung von elektrischen/elektronischen Geräten eine zylinderförmig gestaltete, topfförmige Vertiefung als Ankoppeleinrichtung aufweist, welche die mechanische, die elektrische sowie die datentechnische Ankopplung ermöglicht. Erfindungsgemäß ist zur elektrischen und datentechnischen Ankopplung eine zweite elektrische Leiterplatte vorgesehen, die als Kontaktstellen mehrere kreisförmig angeordnete elektrische Schleifbahnen aufweist. Somit wird vorteilhafterweise ermöglicht, dass die angekoppelten elektrischen/elektronischen Geräte wie Leuchten, Lautsprecher, Kameras, Präsenzmelder, Bewegungsmelder und so weiter auf besonders einfache Art und Weise vom Benutzer durch Verdrehen funktionsoptimiert ausgerichtet werden können, wenn diese gehäuseseitig mit einem passenden, Schleifkontakte aufweisenden, zylindrisch gestalteten Koppelteil ausgerüstet sind.

Weitere vorteilhafte Ausgestaltungen des erfindungsgemäßen Gegenstandes sind in den Unteransprüchen angegeben. Anhand eines Ausführungsbeispiels sei der erfindungsgemäße Gegenstand näher beschrieben, dabei zeigen:

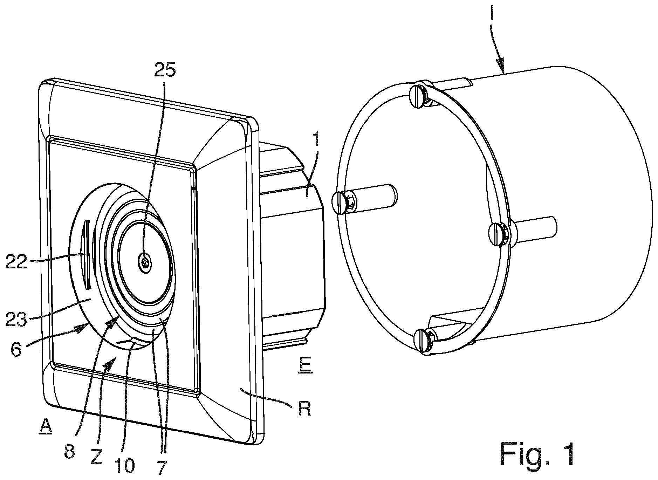

- Fig. 1:: prinziphaft ein aus Einsatz und Aufsatz bestehendes elektrisches/elektronisches Installationsgerät im Zusammenbau, räumlich in schräger Draufsicht;
- Fig. 2:: prinziphaft den Einsatz in Explosionsdarstellung, räumlich in schräger Draufsicht;

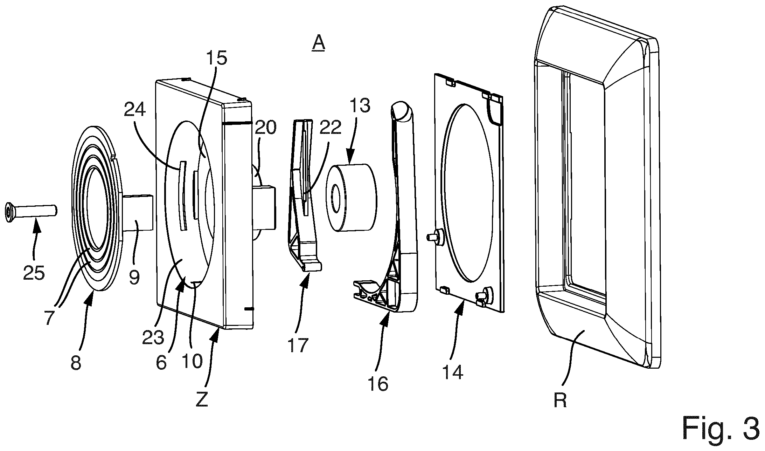

- Fig. 3:: prinziphaft den Aufsatz in Explosionsdarstellung, räumlich in schräger Draufsicht;

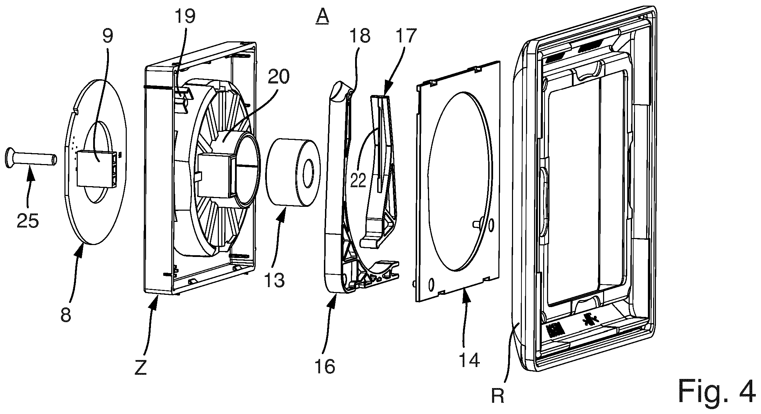

- Fig. 4:: prinziphaft den Aufsatz in Explosionsdarstellung, räumlich in schräger Unteransicht;
- Fig. 5:: prinziphaft einen Vollschnitt des Koppelteils eines elektrischen/elektronischen Gerätes in Zuordnung zu dem ebenfalls im Vollschnitt dargestellten Zentralstück des Aufsatzes des elektrischen/elektronischen Installationsgerätes.

Wie aus den Figuren hervorgeht, besteht ein solches elektrisches/elektronisches Installationsgerät aus einem, in einer Installationsdose I unterzubringenden, als Einsatz E ausgeführten, in seinem Gehäuse 1 mehrere elektrische/elektronische Bauteile 2 sowie zumindest eine erste elektrische Leiterplatte 3 aufweisenden ersten Funktionsmodul, welches rückseitig mit Verbindungselementen 4 zum Anschluss an ein Installationssystem eines Gebäudes sowie frontseitig mit einem elektrischen Steckerteil 5 versehen ist, welches zum Anschluss eines wandseitig anzuordnenden, als Aufsatz A ausgebildeten zweiten Funktionsmoduls vorgesehen ist. Das als Aufsatz A ausgebildete zweite Funktionsmodul weist zur wiederlösbaren Ankopplung von elektrischen/elektronischen Geräten G frontseitig eine zylindrische, topfförmige Vertiefung 6 auf, in welcher eine, mehrere kreisförmig angeordnete elektrische Schleifbahnen 7 aufweisende, zweite elektrische Leiterplatte 8 angeordnet ist. Die elektrischen Schleifbahnen 7 stehen über ein, mit dem elektrischen Steckerteil 5 des Einsatzes E koppelbares, elektrisches Buchsenteil 9 mit der im Gehäuse 1 des Einsatzes E angeordneten ersten elektrischen Leiterplatte 3 elektrisch leitend in Verbindung.

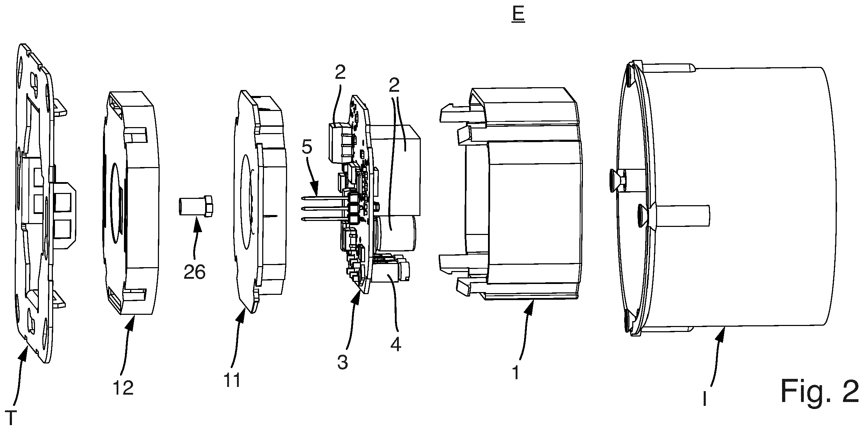

Wie insbesondere aus Figur 2 hervorgeht, besteht der Einsatz E hauptsächlich aus einer, mit mehreren elektrischen/elektronischen Bauteilen 2 bestückten, ersten elektrischen Leiterplatte 3, einem zur Aufnahme der ersten elektrischen Leiterplatte 3 vorgesehenen Gehäuse 1, einem am Gehäuse 1 festzulegenden Zwischendeckel 11 und einem, ebenfalls am Gehäuse 1 festzulegenden, mit einer Tragplatte T ausrüstbaren Enddeckel 12. Wie bereits erwähnt, ist der Einsatz E zur Aufnahme in einer handelsüblichen Installationsdose I vorgesehen. Die erste elektrische Leiterplatte 3 ist mit mehreren zur Funktion notwendigen elektrischen/elektronischen Bauteilen 2 bestückt. Dabei weist die erste elektrische Leiterplatte 3 das Steckerteil 5 und die Verbindungselemente 4 auf, über welche der Anschluss an ein Installationssystem eines Gebäudes hergestellt wird. Zur Energieversorgung der an den Aufsatz A ankoppelbaren elektrischen/elektronischen Geräte G weist die erste elektrische Leiterplatte 3 zudem ein Netzteil auf. Das auf der ersten elektrischen Leiterplatte 3 befindliche elektrische Steckerteil 5 ist als dreipolige Stiftleiste ausgeführt. Beim vorliegenden Ausführungsbeispiel besteht die Tragplatte T aus Metall und ist über angeformte Befestigungselemente am Enddeckel 12 festgelegt. Es ist jedoch genauso gut möglich, eine aus Kunststoff bestehende Tragplatte zu verwenden, die beispielsweise an das Gehäuse 1 beziehungsweise dessen Enddeckel 12 angeformt ist. Das Gehäuse 1 dient zur Aufnahme der mit den elektrischen Bauteilen 2 bestückten ersten elektrischen Leiterplatte 3 und wird verrastend mittels des Zwischendeckels 11 und des Enddeckels 12 frontseitig verschlossen.

Wie des Weiteren aus den Figuren hervorgeht, besteht der Aufsatz A hauptsächlich aus der zweiten elektrischen Leiterplatte 8, einem mit der zylindrischen, topfförmigen Vertiefung 6 versehenen, von einem Designrahmen R umgebenen Zentralstück Z sowie einer Verriegelungseinrichtung, einem Koppelmagneten 13 und einer Abdeckung 14. Die zweite elektrische Leiterplatte 8 wird frontseitig in die erste topfförmige Vertiefung 6 des Zentralstücks Z eingesetzt und kommt letztendlich auf der frontseitigen Bodenfläche 15 der zylindrischen, topfförmigen Vertiefung 6 zur Anlage. Über zwei, einstückig mit der Umfangswandung 23 der zylindrischen, topfförmigen Vertiefung 6 ausgebildeten Rastlaschen 10 wird die zweite Leiterplatte 8, positionsgerecht auf der Bodenfläche 15 aufliegend, im Innenraum der zylindrischen, topfförmigen Vertiefung 6 gehalten. Die Verriegelungseinrichtung weist eine Hebelanordnung, bestehend aus einem ersten Hebel 16 und einem zweiten Hebel 17 auf, welche verstellbar an der dem Einsatz E zugewandten Seite des Zentralstücks Z angeordnet sind. Am ersten Hebel 16 der Hebelanordnung ist ein erster Haltemagnet 18 befestigt, welcher mit einem, an der dem Einsatz E zugewandten Seite des Zentralstücks Z festgelegten zweiten Haltemagneten 19 zusammenwirkt. Zudem weist das Zentralstück Z an seiner dem Einsatz E zugewandten Seite eine Aufnahmetasche 20 auf, in welcher der Koppelmagnet 13 festgelegt ist, welcher mit einem Gegenmagneten 21 eines anzukoppelnden elektrischen/elektronischen Gerätes G haltend zusammenwirkt.

Wie des Weiteren aus den Figuren hervorgeht, ist das am Aufsatz A vorhandene elektrische Buchsenteil 9 als dreipolige Buchsenleiste ausgeführt und steht elektrisch leitend - wie bereits erwähnt - mit dem als dreipolige Stiftleiste ausgeführten elektrischen Steckerteil 5 des Einsatzes E in Verbindung. Wie ebenfalls bereits beschrieben, ist am Aufsatz A eine, eine mechanische Wirkverbindung mit dem angekoppelten elektrischen/elektronischen Gerät G herstellende Verriegelungseinrichtung verstellbar gelagert, deren Hebelanordnung aus einem ersten Hebel 16 und aus einem zweiten Hebel 17 besteht. Die Lagerung der beiden Hebel 16, 17 wird zudem durch angeformte Elemente der Abdeckung 14 unterstützt, welche an der dem Einsatz E zugewandten Rückseite des Zentralstücks Z verrastet wird. Über eine Gelenkanordnung steht der erste Hebel 16 mit dem zweiten Hebel 17 in Wirkverbindung, so dass die am ersten Hebel 16 bewirkten Bewegungen über die Gelenkanordnung auf den zweiten Hebel 17 übertragen werden. An jedem der beiden Hebel 16, 17 ist jeweils ein messerartig ausgeführtes Riegelelement 22 angeformt. Die beiden Riegelelemente 22 durchgreifen partiell die Umfangswand 23 der zylindrischen, topfförmigen Vertiefung 6. Zu diesem Zweck sind in die Umfangswand 23 zwei schlitzförmige Ausnehmungen 24 eingeformt. Über eine Schraubverbindung wird der Aufsatz A am Einsatz E befestigt. Zu diesem Zweck ist eine Schraube 25 vorgesehen, über die der Aufsatz A an den Einsatz E angeschraubt wird, welcher zu diesem Zweck am Enddeckel 12 seines Gehäuses 1 mit einer Schraubbuchse 26 versehen ist.

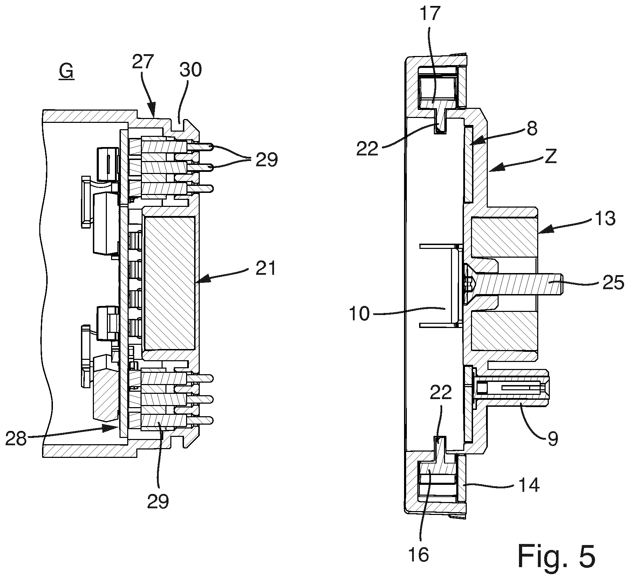

Wie insbesondere aus Figur 5 hervorgeht, weist jedes zur Ankoppelung vorgesehene elektrische/elektronische Gerät G eine Gehäuseanordnung auf, welche mit einem hutförmigen Koppelteil 27 versehen ist. Das gehäuseseitige Koppelteil 27 nimmt in seinem Innenraum eine dritte elektrische Leiterplatte 28 auf. Die dritte elektrische Leiterplatte 28 ist zur Kontaktierung mit den drei Schleifbahnen 7 der zweiten elektrischen Leiterplatte 8 mit sechs Schleifkontakten 29 bestückt. Jeweils zwei Schleifkontakte 29 sind dabei einer der drei Schleifbahnen 7 zugeordnet, so dass der Abgriff redundant über jeweils zwei Kontaktstellen erfolgt. Außerdem ist im Innenraum des Koppelteils 27 der mit dem Koppelmagneten 13 des Aufsatzes A haltend zusammenwirkende Gegenmagnet 21 untergebracht. Die anzukoppelnden elektrischen/elektronischen Geräte G können unterschiedlich gestaltete Gehäuseanordnungen aufweisen, wobei dann darauf abgestimmte unterschiedliche Funktionsbauteile zur Verwendung kommen können. Beispielsweise können die elektrischen/elektronischen Geräte G als Leuchten, Lautsprecher, Kameras, Präsenzmelder, Bewegungsmelder und so weiter ausgeführt sein. Die Koppelteile 27 der anzukoppelnden elektrischen/elektronischen Geräte G sind jedoch immer identisch ausgestaltet. Das Koppelteil 27 der zur Ankopplung vorgesehenen elektrischen/elektronischen Geräte G stellt somit ein Passstück für die im Zentralstück Z des elektrischen/elektronischen Installationsgerätes befindliche topfförmige Vertiefung 6 dar. Wie insbesondere aus Figur 5 hervorgeht, ist in der Außenwand des hutförmig gestalteten Koppelteils 27 eine umlaufend angeordnete, nutförmige Ausnehmung 30 eingebracht, welche mit den beiden Riegelelementen 22 des ersten Hebels 16 und des zweiten Hebels 17 der im Aufsatz A beziehungsweise im Zentralstück Z des elektrischen/elektronischen Installationsgerätes befindlichen Verriegelungseinrichtung zusammenwirkt.

Es ist somit auf einfache Art und Weise ein aus einem Einsatz E und aus einem Aufsatz A bestehendes elektrisches/elektronisches Installationsgerät geschaffen, dessen Aufsatz A frontseitig die mechanische und die elektrische sowie die datentechnische Ankopplung vieler verschiedenartig ausgeführter elektrischer/elektronischer Geräte G über eine einheitliche ausgeführte Ankoppeleinrichtung ermöglicht.

### Bezugszeichenliste:

- 1: Gehäuse
- 2: Elektrische/elektronische Bauteile
- 3: Erste elektrische Leiterplatte
- 4: Verbindungselemente
- 5: Elektrisches Steckerteil
- 6: Topfförmige Vertiefung
- 7: Elektrische Schleifbahnen
- 8: Zweite elektrische Leiterplatte
- 9: Elektrisches Buchsenteil
- 10: Rastlaschen
- 11: Zwischendeckel
- 12: Enddeckel
- 13: Koppelmagnet
- 14: Abdeckung
- 15: Bodenfläche
- 16: Erster Hebel
- 17: Zweiter Hebel
- 18: Erster Haltemagnet
- 19: Zweiter Haltemagnet
- 20: Aufnahmetasche
- 21: Gegenmagnet
- 22: Riegelelemente
- 23: Umfangswand
- 24: Ausnehmungen
- 25: Schraube
- 26: Schraubbuchse
- 27: Koppelteile
- 28: Dritte elektrische Leiterplatte
- 29: Schleifkontakte
- 30: Nutförmige Ausnehmung

- A: Aufsatz
- E: Einsatz
- G: Elektrische/elektronische Geräte
- I: Installationsdose
- R: Designrahmen
- T: Tragplatte
- Z: Zentralstück

## Patentansprüche

1. Elektrisches/elektronisches Installationsgerät mit einem in einer Installationsdose unterzubringenden, als Einsatz ausgeführten, in seinem Gehäuse (1) mehrere elektrische/elektronische Bauteile sowie zumindest eine erste elektrische Leiterplatte aufweisenden als Einsatz (E) ausgebildeten ersten Funktionsmodul und mit einem als Aufsatz (A) ausgebildeten zweiten Funktionsmodul, welches erste Funktionsmodul rückseitig mit Verbindungselementen zum Anschluss an ein Installationssystem eines Gebäudes versehen ist, wobei das als Aufsatz (A) ausgebildete zweite Funktionsmodul zur wiederlösbaren Ankopplung von elektrischen/elektronischen Geräten (G) frontseitig eine topfförmige Vertiefung (6) aufweist, in welcher eine mit mehreren kreisförmig angeordneten elektrischen Schleifbahnen (7) versehene zweite elektrische Leiterplatte (8) angeordnet ist, und wobei das als Aufsatz (A) ausgebildete zweite Funktionsmodul an der dem Einsatz (E) zugewandten Seite eine Aufnahmetasche (20) aufweist, in welcher ein Koppelmagnet (13) festgelegt ist, welcher mit einem Gegenmagneten (21) eines anzukoppelnden elektrischen/elektronischen Gerätes (G) haltend zusammenwirken kann, **dadurch gekennzeichnet, dass** das erste Funktionsmodul frontseitig mit einem elektrischen Steckerteil (5) versehen ist, welches elektrische Steckerteil (5) zum Anschluss an das wandseitig anzuordnende als Aufsatz (A) ausgebildete zweite Funktionsmodul vorgesehen ist, dass in die topfförmige Vertiefung (6) die zweite elektrische Leiterplatte (8) frontseitig eingesetzt
ist, und dass die elektrischen Schleifbahnen (7) mit einem am Aufsatz (A) vorhandenen elektrischen Buchsenteil (9) in Verbindung stehen, welches über das elektrische Steckerteil (5) des Einsatzes (E) die zur Funktion notwendigen elektrischen Verbindungen zu der im Gehäuse (1) des Einsatzes (E) befindlichen ersten elektrischen Leiterplatte (3) herstellt, wobei die zweite elektrische Leiterplatte (8) kreisringförmig ausgebildet ist und die Mantelfläche des Koppelmagneten (13) in radialer Richtung von der zweiten elektrischen Leiterplatte (8) beabstandet ist.

2. Elektrisches/elektronisches Installationsgerät nach Anspruch 1, **dadurch gekennzeichnet, dass** das am Einsatz (E) vorhandene elektrische Steckerteil (5) als mehrpolige Stiftleiste ausgeführt ist.

3. Elektrisches/elektronisches Installationsgerät nach einem der Ansprüche 1 oder 2, **dadurch gekennzeichnet, dass** das am Aufsatz (A) vorhandene elektrische Buchsenteil (9) als mehrpolige Buchsenleiste ausgeführt ist.

4. Elektrisches/elektronisches Installationsgerät nach einem der Ansprüche 1 bis 3, **dadurch gekennzeichnet, dass** am Aufsatz (A) eine, eine mechanische Wirkverbindung mit dem angekoppelten elektrischen/elektronischen Gerät (G) herstellende, Verriegelungseinrichtung vorhanden ist, welche mit zumindest einem Riegelelement (22) die topfförmige Vertiefung (6) partiell durchgreift.

5. Elektrisches/elektronisches Installationsgerät nach Anspruch 4, **dadurch gekennzeichnet, dass** die Verriegelungseinrichtung eine mit Riegelelementen (22) versehene Hebelanordnung aufweist, welche verstellbar am Aufsatz (A) gelagert ist, und dass die Hebelanordnung zur Aufrechterhaltung der mechanischen Wirkverbindung mit zumindest einem ersten Haltemagneten (18) versehen ist, welcher mit zumindest einem am Aufsatz (A) festgelegten zweiten Haltemagneten (19) in Wirkverbindung steht.

6. Elektrisches/elektronisches Installationsgerät nach Anspruch 5, **dadurch gekennzeichnet, dass** die Hebelanordnung einen ersten Hebel (16) und einen an den ersten Hebel (16) beweglich angekoppelten zweiten Hebel (17) aufweist.

7. Elektrisches/elektronisches Installationsgerät nach einem der Ansprüche 5 bis 6, **dadurch gekennzeichnet, dass** die mechanische Wirkverbindung der Verriegelungsreinrichtung mit dem angekoppelten elektrischen/elektronischen Gerät (G) durch ein von außen zuzuführendes Lösewerkzeug aufhebbar ist.

8. Elektrisches/elektronisches Installationsgerät nach den Ansprüchen 5 und 7, **dadurch gekennzeichnet, dass** das Lösewerkzeug zumindest einen Lösemagneten aufweist, welcher zur Aufhebung der mechanischen Wirkverbindung mit dem zumindest einen, an der Verriegelungseinrichtung vorhandenen ersten Haltemagneten (18) zusammenwirkt.

9. Elektrisches/elektronisches Installationsgerät nach einem der Ansprüche 1 bis 8, **dadurch gekennzeichnet, dass** der Aufsatz (A) über zumindest eine Schraubverbindung am Einsatz (E) befestigt ist.

10. Elektrisches/elektronisches Installationsgerät nach einem der Ansprüche 1 bis 9, **dadurch gekennzeichnet, dass** am Gehäuse (1) des Einsatzes (E) eine die wandseitige Festlegung des Einsatzes (E) sicherstellende Tragplatte (T) angeordnet ist.

11. Elektrisches/elektronisches Installationsgerät nach Anspruch 10, **dadurch gekennzeichnet, dass** die Tragplatte (T) einstückig Bestandteil des Gehäuses (1) des Einsatzes (E) ist.

12. Elektrisches/elektronisches Installationsgerät nach einem der Ansprüche 1 bis 11, **dadurch gekennzeichnet, dass** das Zentralstück (Z) des Aufsatzes (A) unter Zwischenschaltung eines Designrahmens (R) am Einsatz (E) gehalten ist.

13. Elektrisches/elektronisches Installationsgerät nach einem der Ansprüche 1 bis 12, **dadurch gekennzeichnet, dass** im Gehäuse (1) des Einsatzes (E) ein mit der ersten elektrischen Leiterplatte (3) in Verbindung stehendes Netzteil untergebracht ist.

14. Anordnung umfassend ein elektrisches/elektronisches Installationsgerät nach einem der Ansprüche 1 bis 13 und ein daran ankoppelbares elektrisches/elektronisches Gerät (G), **dadurch gekennzeichnet, dass** zumindest ein an den Aufsatz (A) ankoppelbares elektrisches/elektronisches Gerät (G) als Leuchte ausgeführt ist.

15. Anordnung umfassend ein elektrisches/elektronisches Installationsgerät nach einem der Ansprüche 1 bis 13 und ein daran ankoppelbares elektrisches/elektronisches Gerät (G), **dadurch gekennzeichnet, dass** zumindest ein an den Aufsatz (A) ankoppelbares elektrisches/elektronisches Gerät (G) als Bewegungsmelder ausgeführt ist.

16. Anordnung umfassend ein elektrisches/elektronisches Installationsgerät nach einem der Ansprüche 1 bis 13 und ein daran ankoppelbares elektrisches/elektronisches Gerät (G), **dadurch gekennzeichnet, dass** zumindest ein an den Aufsatz (A) ankoppelbares elektrisches/elektronisches Gerät (G) als Präsenzmelder ausgeführt ist.

17. Anordnung umfassend ein elektrisches/elektronisches Installationsgerät nach einem der Ansprüche 1 bis 13 und ein daran ankoppelbares elektrisches/elektronisches Gerät (G), **dadurch gekennzeichnet, dass** zumindest ein an den Aufsatz (A) ankoppelbares elektrisches/elektronisches Gerät (G) als Kamera ausgeführt ist.

18. Anordnung umfassend ein elektrisches/elektronisches Installationsgerät nach einem der Ansprüche 1 bis 13 und ein daran ankoppelbares elektrisches/elektronisches Gerät (G), **dadurch gekennzeichnet, dass** zumindest ein an den Aufsatz (A) ankoppelbares elektrisches/elektronisches Gerät (G) als Lautsprecher ausgeführt ist.

## Claims

1. Electrical/electronic installation device with a first functional module designed as an insert (E), to be accommodated in an installation box and having in its housing (1) a plurality of electrical/electronic components and at least one first electrical printed circuit board, and with a second functional module designed as an attachment (A), which first functional module is provided on the rear side with connecting elements for connection to an installation system of a building, wherein the second functional module, designed as an attachment (A), has a pot-shaped recess (6) on the front side for the re-releasable coupling of electrical/electronic devices (G), in which a second electrical circuit board (8) provided with a plurality of circularly arranged electrical contact tracks (7) is arranged, and wherein the second functional module, designed as an attachment (A), has, on the side facing the insert (E), a receiving pocket (20) in which a coupling magnet (13) is fixed, which can cooperate in a holding manner with a counter magnet (21) of an electrical/electronic device (G) to be coupled, **characterized by the fact that** the first functional module is provided at the front with an electrical plug (5), which electrical plug (5) is provided for connection to the second functional module to be arranged at the wall side and constructed as an attachment (A), by the fact that the second electrical printed circuit board (8) is inserted at the front into the pot-shaped recess (6), and by the fact that the electrical contact strips (7) are connected to an electrical socket (9) provided at the attachment (A), which, via the electrical plug (5) of the insert (E) makes the electrical connections necessary for operation to the first electrical printed circuit board (3) located in the housing (1) of the insert (E), the second electrical printed circuit board (8) being of annular design and the outer surface of the coupling magnet (13) being spaced apart from the second electrical printed circuit board (8) in radial direction.

2. Electrical/electronic installation device in accordance with Claim 1, **characterised by the fact** that the electrical plug (5) present on the insert (E) is designed as a multipole pin strip.

3. Electrical/electronic installation device in accordance with any of Claims 1 or 2, **characterised by the fact** that the electrical socket (9) present on the attachment (A) is designed as a multipole socket strip.

4. Electrical/electronic installation device in accordance with any of Claims 1 to 3, **characterised by the fact** that on the attachment (A) there is a locking device which establishes a mechanical operative connection with the coupled electrical/electronic device (G) and which partially penetrates the pot-shaped recess (6) with at least one locking element (22).

5. Electrical/electronic installation device in accordance with Claim 4, **characterised by the fact** that the locking device comprises a lever arrangement which is provided with locking elements (22) and is adjustably mounted on the attachment (A), and that the lever arrangement is provided with at least one first holding magnet (18) for maintaining the mechanical operative connection, which is in operative connection with at least one second holding magnet (19) fixed to the attachment (A).

6. Electrical/electronic installation device in accordance with Claim 5, **characterised by the fact** that the lever arrangement comprises a first lever (16) and a second lever (17) movably coupled to the first lever (16).

7. Electrical/electronic installation device in accordance with any of Claims 5 to 6, **characterised by the fact** that the mechanical operative connection of the locking device with the coupled electrical/electronic device (G) can be released by a release tool to be operated from outside.

8. Electrical/electronic installation device in accordance with Claims 5 and 7, **characterised by the fact** that the release tool has at least one release magnet which cooperates with the at least one first holding magnet (18) present on the locking device to cancel the mechanical operative connection.

9. Electrical/electronic installation device in accordance with any of Claims 1 to 8, **characterised by the fact** that the attachment (A) is attached to the insert (E) by at least one screw connection.

10. Electrical/electronic installation device in accordance with any of Claims 1 to 9, **characterised by the fact** that a support plate (T) is arranged on the housing (1) of the insert (E) and ensures that the insert (E) is fixed to the wall.

11. Electrical/electronic installation device in accordance with Claim 10, **characterised by the fact** that the support plate (T) is an integral part of the housing (1) of the insert (E).

12. Electrical/electronic installation device in accordance with any of Claims 1 to 11, **characterised by the fact** that the central piece (Z) of the attachment (A) is held on the insert (E) with the interposition of a design frame (R).

13. Electrical/electronic installation device in accordance with any of Claims 1 to 12, **characterised by the fact** that the housing (1) of the insert (E) accommodates a power supply unit connected to the first electrical circuit board (3).

14. Arrangement comprising an electrical/electronic installation device in accordance with any of Claims 1 to 13 and an electrical/electronic device (G) which can be coupled thereto, **characterised by the fact** that at least one electrical/electronic device (G) which can be coupled to the attachment (A) is designed as a luminaire.

15. Arrangement comprising an electrical/electronic installation device in accordance with any of Claims 1 to 13 and an electrical/electronic device (G) which can be coupled thereto, **characterised by the fact** that at least one electrical/electronic device (G) which can be coupled to the attachment (A) is designed as motion detector.

16. Arrangement comprising an electrical/electronic installation device in accordance with any of Claims 1 to 13 and an electrical/electronic device (G) which can be coupled thereto, **characterised by the fact** that at least one electrical/electronic device (G) which can be coupled to the attachment (A) is designed as presence detector.

17. Arrangement comprising an electrical/electronic installation device in accordance with any of Claims 1 to 13 and an electrical/electronic device (G) which can be coupled thereto, **characterised by the fact** that at least one electrical/electronic device (G) which can be coupled to the attachment (A) is designed as camera.

18. Arrangement comprising an electrical/electronic installation device in accordance with any of Claims 1 to 13 and an electrical/electronic device (G) which can be coupled thereto, **characterised by the fact** that at least one electrical/electronic device (G) which can be coupled to the attachment (A) is designed as loudspeaker.

## Revendications

1. Appareil d'installation électrique/électronique avec un premier module fonctionnel réalisé sous forme d'insert (E), à loger dans un boîtier d'installation, comportant dans son boîtier (1) plusieurs composants électriques/électroniques et au moins une première carte de circuit imprimé et avec un deuxième module fonctionnel réalisé sous forme d'embout (A), lequel premier module fonctionnel est pourvu sur la face arrière d'éléments de raccordement pour le raccordement à un système d'installation d'un bâtiment, dans lequel le deuxième module fonctionnel, conçu comme un embout (A), pour le couplage amovible de dispositifs électriques/électroniques (G) présente sur la face avant un évidement (6) en forme de pot dans lequel est disposée une deuxième carte de circuit imprimé électrique (8) pourvue d'une pluralité de pistes de contact électrique (7) disposées en cercle, et dans lequel le deuxième module fonctionnel, conçu comme un embout (A), présente, sur le côté tourné vers l'insert (E), une poche de réception (20), dans laquelle est fixé un aimant de couplage (13) qui peut coopérer de manière à maintenir avec un contre-aimant (21) d'un dispositif électrique/électronique (G) à coupler, **caractérisé en ce que** le premier module fonctionnel est muni à l'avant d'une fiche électrique (5), laquelle fiche électrique (5) est prévue pour la connexion au deuxième module fonctionnel à disposer du côté du mur et réalisé sous la forme d'un embout (A), **en ce que** la deuxième carte de circuit imprimé électrique (8) est insérée à l'avant dans l'évidement en forme de pot (6), et **en ce que** les bandes de contact électriques (7) sont reliées à une prise électrique (9) prévue sur l'embout (A), qui, par l'intermédiaire de la fiche électrique (5) de l'insert (E), établit les connexions électriques nécessaires au fonctionnement avec la première carte de circuit imprimé électrique (3) située dans le boîtier (1) de l'insert (E), la deuxième carte de circuit imprimé électrique (8) étant de forme annulaire et la surface extérieure de l'aimant de couplage (13) étant espacée de la deuxième carte de circuit imprimé électrique (8) en direction radiale.

2. Appareil d'installation électrique/électronique selon la revendication 1, **caractérisé en ce que** la fiche électrique (5) présente sur l'insert (E) est conçue comme une barrette à broches multipolaire.

3. Appareil d'installation électrique/électronique selon l'une des revendications 1 ou 2, **caractérisé en ce que** la prise électrique (9) présente sur l'embout (A) est conçue comme bande de prises multipolaire.

4. Appareil d'installation électrique/électronique selon l'une des revendications 1 à 3, **caractérisé en ce qu'un** dispositif de verrouillage est prévu sur l'embout (A), qui établit une liaison fonctionnelle mécanique avec le dispositif électrique/électronique couplé (G) et pénètre partiellement dans l'évidement en forme de pot (6) avec au moins un élément de verrouillage (22).

5. Appareil d'installation électrique/électronique selon la revendication 4, **caractérisé en ce que** le dispositif de verrouillage comprend un agencement de levier muni d'éléments de verrouillage (22), qui est monté de manière réglable sur l'embout (A), et **en ce que** l'agencement de levier est muni d'au moins un premier aimant de maintien (18) pour maintenir la liaison fonctionnelle mécanique, qui est en liaison fonctionnelle avec au moins un deuxième aimant de maintien (19) fixé à l'embout (A).

6. Appareil d'installation électrique/électronique selon la revendication 5, **caractérisé en ce que** l'agencement de levier comprend un premier levier (16) et un second levier (17) couplé de manière mobile au premier levier (16).

7. Appareil d'installation électrique/électronique selon l'une des revendications 5 à 6, **caractérisé en ce que** la liaison fonctionnelle mécanique du dispositif de verrouillage avec le dispositif électrique/électronique couplé (G) peut être annulée par un outil de déverrouillage à alimenter de l'extérieur.

8. Appareil d'installation électrique/électronique selon les revendications 5 et 7, **caractérisé en ce que** l'outil de déclenchement comporte au moins un aimant de déclenchement qui coopère avec l'au moins un premier aimant de maintien (18) présent sur le dispositif de verrouillage pour annuler la liaison fonctionnelle mécanique.

9. Appareil d'installation électrique/électronique selon l'une des revendications 1 à 8, **caractérisé en ce que** l'embout (A) est fixée à l'insert (E) par au moins un raccord à vis.

10. Appareil d'installation électrique/électronique selon l'une des revendications 1 à 9, **caractérisé en ce qu'**une plaque de support (T) est disposée sur le boîtier (1) de l'insert (E) et assure la fixation de l'insert (E) au mur.

11. Appareil d'installation électrique/électronique selon la revendication 10, **caractérisé en ce que** la plaque de support (T) fait partie intégrante du boîtier (1) de l'insert (E).

12. Appareil d'installation électrique/électronique selon l'une des revendications 1 à 11, **caractérisé en ce que** la pièce centrale (Z) de l'embout (A) est maintenue sur l'insert (E) avec interposition d'un cadre de conception (R).

13. Appareil d'installation électrique/électronique selon l'une des revendications 1 à 12, **caractérisé en ce qu'**une unité d'alimentation connectée à la première carte de circuit électrique (3) est logée dans le boîtier (1) de l'insert (E).

14. Arrangement comprenant un appareil d'installation électrique/électronique selon l'une des revendications 1 à 13 et un dispositif électrique/électronique (G) pouvant être couplé à celui-ci, **caractérisé en ce que** qu'au moins un dispositif électrique/électronique (G) pouvant être couplé à l'embout (A) est conçu comme un luminaire.

15. Arrangement comprenant un appareil d'installation électrique/électronique selon l'une des revendications 1 à 13 et un dispositif électrique/électronique (G) pouvant être couplé à celui-ci, **caractérisé en ce que** qu'au moins un dispositif électrique/électronique (G) pouvant être couplé à l'embout (A) est conçu comme un détecteur de movement.

16. Arrangement comprenant un appareil d'installation électrique/électronique selon l'une des revendications 1 à 13 et un dispositif électrique/électronique (G) pouvant être couplé à celui-ci, **caractérisé en ce que** qu'au moins un dispositif électrique/électronique (G) pouvant être couplé à l'embout (A) est conçu comme un détecteur de présence.

17. Arrangement comprenant un appareil d'installation électrique/électronique selon l'une des revendications 1 à 13 et un dispositif électrique/électronique (G) pouvant être couplé à celui-ci, **caractérisé en ce que** qu'au moins un dispositif électrique/électronique (G) qui peut être couplé à l'embout (A) est conçu comme une caméra.

18. Arrangement comprenant un appareil d'installation électrique/électronique selon l'une des revendications 1 à 13 et un dispositif électrique/électronique (G) pouvant être couplé à celui-ci, **caractérisé en ce que** qu'au moins un dispositif électrique/électronique (G) qui peut être couplé à l'embout (A) est conçu comme un haut-parleur.
